**Europäisches Patentamt**

**European Patent Office**

**Office européen des brevets**

(19)

(11) Veröffentlichungsnummer: **0 290 984 B1**

(12) ## EUROPÄISCHE PATENTSCHRIFT

(45) Veröffentlichungstag der Patentschrift:
**17.04.91 Patentblatt 91/16**

(51) Int. Cl.$^5$: **B01J 2/00, B01J 2/28,**
**B01J 37/00**

(21) Anmeldenummer: **88107363.9**

(22) Anmeldetag: **07.05.88**

(54) Verfahren zur formgestaltenden Agglomerierung von Feststoffpartikeln.

(30) Priorität: **15.05.87 DE 3716286**

(43) Veröffentlichungstag der Anmeldung:
**17.11.88 Patentblatt 88/46**

(45) Bekanntmachung des Hinweises auf die
Patenterteilung:
**17.04.91 Patentblatt 91/16**

(84) Benannte Vertragsstaaten:
**AT BE CH DE ES FR GB GR IT LI LU NL SE**

(56) Entgegenhaltungen:
**EP-A- 0 167 690**
**GB-A- 1 487 667**
**GB-A- 1 595 054**

(73) Patentinhaber: **Henkel**
**Kommanditgesellschaft auf Aktien**
**Postfach 1100 Henkelstrasse 67**
**W-4000 Düsseldorf 1 (DE)**

(72) Erfinder: **Ritter, Wolfgang, Dr.**
**Am Bandenfeld 74**
**W-5657 Haan (DE)**
Erfinder: **Handwerk, Hans-Peter**
**Boschstrasse 57**
**W-4000 Düsseldorf (DE)**
Erfinder: **Carduck, Franz-Josef, Dr.**
**Landstrasse 18**
**W-5657 Haan (DE)**

## Beschreibung

Die Erfindung betrifft ein neues Verfahren zur formgestaltenden Agglomerierung von feinteiligen Feststoffpartikeln unter Mitverwendung von Bindemitteln sowie die Anwendung des neuen Agglomerationsverfahrens zur Herstellung von insbesondere rieselfähigen gekörnten Massen, die auf den verschiedenartigsten Einsatzgebieten Verwendung finden können. Die Erfindung will insbesondere in einem konzeptionell neuen Ansatz reaktive Bindemittelsysteme einsetzen, die im Laufe des Verfahrens vom löslichen in den unlöslichen Zustand überführt werden. Durch gezielten Einsatz dieser Hilfsmittel im nachfolgend geschilderten Mehrstufenverfahren ergibt sich ein vereinfachtes und ökonomisches Verfahren zur Herstellung von insbesondere schüttund rieselfähigen Agglomeraten, die anorganische und/oder organische Komponenten in großer Breite als Wertstoff enthalten können.

Aus dem britischen Patent 1 595 054 ist ein Verfahren zur formgestaltenden Agglomerierung von feinteiligen, in einer Flüssigphase suspendierten Mikroorganismen bekannt, das zur Einkapselung dieser Mikroorganismen in einem gefällten Polymer führt. Die Lehre des britischen Patents gibt jedoch keinen Hinweis auf eine Formgestaltung oder auf die Agglomerierung pulver- bis rieselförmiger Feststoffe oder Feststoffgemische. Verarbeitet werden vielmehr Bakterien-Suspensionen.

Ein ganz ähnliches Verfahren ist aus der europäischen Patentanmeldung 167 690 bekannt. Diese betrifft die Inkapselierung lebender Zellen, wobei eine Zellsuspension mit einem Polymer versehen wird und unter Anlegung einer elektrischen Spannung in eine Fällungslösung getropft wird. Durch die elektrische Ladung kommt es zwar zu einer Formgebung, jedoch erhält der Fachmann auch hier keinen Hinweis auf die Agglomerierung von pulver- bis rieselförmigen Feststoffen bzw. Feststoffgemischen.

Das neue Verfahren zur formgestaltenden Agglomerierung von feinteiligen, in einer Flüssigphase suspendierten Feststoffpartikeln unter Mitverwendung eines Bindemittels ist erfindungsgemäß dadurch gekennzeichnet, daß man als Bindemittel in der gewählten Flüssigphase lösliche Polymere einsetzt, die zur Bildung unlöslicher Salze geeignete Säuregruppen aufweisen, wobei diese Säuregruppen auch in Form löslicher Salze vorliegen können. Im erfindungsgemäßen Sinne werden diese Bindemittel gelöst in der Flüssigphase mit den zu agglomerierenden Feststoffpartikeln zu einer pastös verformbaren Masse aufbereitet, woraufhin diese Masse formgestaltet mit einer Lösung solcher Kationen vereinigt wird, die mit den Säuregruppen des polymeren Bindemittels zum unlöslichen Festkörper abreagieren, dabei setzt man als zu agglomerierendes unlösliches Gut pulver- bis rieselförmige Feststoffe bzw. Feststoffgemische z.B. auf Basis Metallpulver, unlösliche Metallverbindungen wie Metalloxide, -sulfide, unlösliche Metallsalze und/oder Aktivkohle ein.

Der erste Teilschritt des erfindungsgemäßen Verfahrens kennzeichnet sich damit durch die Auswahl und Vereinigung der folgenden Elemente :

Die zu agglomerierenden Wertstoffe werden in hinreichend feinverteilter Form zusammen mit einer Flüssigphase eingesetzt, in der diese Wertstoffe wenigstens anteilsweise und vorzugsweise wenigstens überwiegend nicht löslich sind, so daß die Ausbildung von feinteiligen Feststoffsuspensionen möglich ist. Gleichzeitig wird ein polymeres Bindemittel mitverwendet, das in dieser ersten Verfahrensstufe in der ausgewählten Flüssigphase löslich ist, dabei aber ganz bestimmte funktionelle Gruppen enthält, die in einfacher Weise die Überführung des löslichen Polymeren in den unlöslichen Zustand ermöglichen. Im Sinne der erfindungsgemäßen Lehre handelt es sich hierbei um Säuregruppen, die zur Bildung unlöslicher Salze der eingesetzten Polymerverbindung geeignet sind.

Das Mehrstoffgemisch aus Flüssigphase, gelöstem polymeren Bindemittel und suspendierten Feststoffen wird in die gewünschte Raumform der herzustellenden Agglomeratpartikel verformt und dann der Einwirkung solcher Kationen ausgesetzt, die mit den Säuregruppen des polymeren Bindemittels zum unlöslichen Festkörper reagieren. Es hat sich herausgestellt, daß die üblicherweise spontan ablaufende Salzbildung zu einer so raschen Verfestigung zunächst der Außenbereiche des formgestaltenden Mehrkomponentenkörpers führt, daß die hinreichende Stabilisierung der vorbestimmten Form und die Verhinderung des unerwünschten Zusammenbackens der Agglomeratteilchen sichergestellt werden können. Im Rahmen einer sich gewünschtenfalls anschließenden Nachreaktionsphase kann die stabilisierende und verfestigende Ausbildung der unlöslichen Polymersalze auch in tieferen Schichten der jeweiligen Formkörper sichergestellt werden – bis hin zur durchdringenden Verfestigung des gesamten Materials – .

In der bevorzugten Ausführungsform arbeitet das erfindungsgemäße Verfahren mit zwei flüssigkeitshaltigen Phasen, die im Laufe des Verfahrens zu einem System vereinigt werden. Hierbei werden in den beiden zunächst getrennt gehaltenen Phasen insbesondere miteinander mischbare Flüssigkeiten eingesetzt. Da die Salzbildung am polymeren Bindemittel der entscheidende Schritt zur permanenten Formgestaltung ist, bietet sich die Verwendung von wäßrigen bzw. wäßrig/organischen Flüssigkeiten besonders an. Bevorzugt wird als Flüssigkeit in den beiden Teilkomponenten des Systems Wasser eingesetzt.

Im nachfolgenden wird zunächst die den zu agglomerierenden Feststoff und das polymere Bindemittel enthaltende mehrphasige Teilkomponente des erfindungsgemäßen Verfahrens beschrieben. Hierbei wird einfachheitshalber die Flüssigphase im allgemeinen als Wasser gekennzeichnet, wenngleich – wie angegeben – die erfindungsgemäße Lehre in ihrer breitesten Fassung darauf auch nicht eingeschränkt ist.

Das zu agglomerierende Gut liegt in der Regel in Form von Pulvern oder als rieselförmiger Feststoff bzw. Feststoffgemisch vor, das in der wäßrigen Phase im wesentlichen unlöslich ist. Beispiele für solche Materialien sind etwa Metallpulver, unlösliche Metallverbindungen wie entsprechende Metalloxide oder Metallsulfide, unlösliche Metallsalze, z.B. metallische Mischoxide und dergleichen. Es kann sich hierbei um Komponenten handeln, die als solche im Agglomerat den Wertstoff für die beabsichtigte Anwendung des Agglomerats besitzen oder aber dort auch erst in situ durch geeignete Reaktion – beispielsweise durch eine Reduktion oder Oxidation – in den aktiven Wertstoff umgewandelt werden können.

Neben oder anstelle solcher anorganischer Komponenten können feinteilige in der Flüssigphase unlösliche Feststoffe auf Basis von Kohlenstoff bzw. Kohlenstoffverbindungen im erfindungsgemäßen Verfahren agglomeriert werden. Ein besonders wichtiges Beispiel ist hier etwa Aktivkohle, die alleine – beispielsweise zur Herstellung von Aktivkohlebetten – oder zusammen mit metallischen und/oder anorganischen Komponenten der zuvor geschilderten Art Verwendung finden kann. Wichtige Anwendungsgebiete für diese zuletzt beschriebenen Kombinationen finden sich beispielsweise auf dem Gebiet der Katalysatorherstellung insbesondere bei der vereinfachten Herstellung von gekörnten, rieselfähigen Katalysatoren. Das erfindungsgemäße Verfahren umfaßt aber auch die formgestaltende Agglomerierung von unlöslichen feinteiligen organischen Komponenten beliebiger Art unter den insgesamt milden und schonenden Verfahrensbedingungen des erfindungsgemäßen Verfahrens.

Geeignete wasserlösliche Bindemittel sind Polymerverbindungen natürlichen und/oder synthetischen Ursprungs, die geeignete salzbildende Säuregruppen in der Polymerstruktur enthalten. Säuregruppen dieser Art sind insbesondere Carboxylgruppen und/oder Sulfosäuregruppen, wenn auch die Erfindung hierauf nicht eingeschränkt ist. Beliebige andere, zur Bildung unlöslicher Salze geeignete, funktionell als Anion wirkende Säuregruppierungen sind ebenso geeignet.

Geeignete Bindemittel natürlichen Ursprungs sind lösliche, insbesondere wasserlösliche Polysaccharidderivate mit entsprechenden salzbildenden anionischen Gruppen. Bevorzugte Beispiele sind hier Carboxymethylcellulose, Carboxymethylstärke und/oder carboxymethylsubstituierte Guarverbindungen. Anstelle der hier speziell genannte Carboxymethylgruppen können andere Carboxyalkylgruppierungen oder solche Polysaccharidderivate eingesetzt werden, die anionisch wirkende Säuregruppen unmittelbar am Polysaccharidgerüst substituiert aufweisen.

Neben oder anstelle solcher Bindemittel natürlichen Ursprungs sind insbesondere synthetische lösliche Polymerbindemittel geeignet. Entsprechend funktionell anionisch reagierende synthetische Polymere sind insbesondere Homo- und/oder Copolymere niederer olefinisch ungesättigter Mono- und/oder Polycarbonsäuren. Geeignete Ausgangsmonomere mit einem Gehalt an Carboxylgruppen sind insbesondere niedere alpha, beta ungesättigte Carbonsäuren – hier insbesondere Acrylsäure und Methacrylsäure – bzw. entsprechende niedere olefinisch ungesättigte Dicarbonsäuren – hier insbesondere Maleinsäure bzw. Maleinsäureanhydrid. Weiterhin geeignet sind Acryloyloxypropionsäure, Crotonsäure, Itaconsäure, Itaconsäureanhydrid, Isocrotonsäure, Zimtsäure, Halbester der Maleinsäure und der Fumarsäure, wie z.B. Maleinsäuremonobutylester und Fumarsäure. Durch Auswahl und Menge der Säuregruppierungen enthaltenden Monomerbestandteile und-/oder der mit diesen ungesättigten Carbonsäuren copolymerisierten Comonomeren lassen sich die Eigenschaften des polymeren Bindemittels in vielfacher Weise variieren und den erfindungsgemäßen Bedürfnissen anpassen.

Zu nennen ist hier einerseits die hinreichende Wasserlöslichkeit des polymeren Bindemittels in dem wäßrigen Medium, um die homogene Verteilung des Bindemittels über diesen gesamten Reaktionsbestandteil sicherzustellen. Wichtig ist dabei zusätzlich, daß im erfindungsgemäßen Verfahren die hier betroffenen Bindemittel auch in Form ihrer wasserlöslichen Salze Carboxylate ein gesetzt werden können. Geeignete wasserlösliche Salze sind insbesondere Alkalisalze, Ammoniumsalze, Aminsalze bzw. Polyaminsalze. So kann beispielsweise in diesem Reaktionsbestandteil die hinreichende Wasserlöslichkeit polymerer Bindemittel der geschilderten Art dadurch sichergestellt werden, daß diese Reaktionskomponente natriumalkalisch eingestellt wird, wobei pH-Werte im Bereich von etwa 8 bis 13 geeignet sein können. Die gewählte Konzentration an anionisch reagierenden Säuregruppen im polymeren Bindemittel hat Einfluß auf die in der Umsetzung mit der kationischen zweiten Reaktionskomponente entstehende Vernetzungsdichte. Andererseits können wiederum besonders temperaturstabile Bindemittel dadurch zum Einsatz kommen, daß Copolymerisate der genannten niederen ungesättigten Mono- und/oder Polycarbonsäuren mit insbesondere niederen alpha-Olefinen verwendet werden.

Im Rahmen des erfindungsgemäßen Handelns hat es sich als vorteilhaft gezeigt, polymere Bindemittel zu verwenden, die einen Gehalt an Säuregruppen aufweisenden Monomerelementen in einer Menge von wenigstens etwa 5 mol-%, vorzugsweise von wenigstens etwa 20 mol-%, besitzen. Besonders geeignete Copolymere enthalten etwa 20 bis 60 mol-% niedere Carbonsäureeinheiten der genannten Art, die mit niederen alpha-Olefinen, wie Ethylen und/oder Propylen und/oder mit anderen olefinischen Komponenten, wie Methylvinylether copolymerisiert sind.

Geeignete wasserlösliche polymere Bindemittel der genannten Art besitzen beispielsweise mittlere Molekulargewichte (Zahlenmittel Mn) von 500 bis 5 Mio., insbesondere im Bereich von etwa 1.000 bis 500.000. Bevorzugte Bindemittelkonzentrationen liegen in der hier besprochenen ersten Reaktantenphase üblicherweise im Bereich von 1 bis 30 Gew.-% und vorzugsweise im Bereich von etwa 2 bis 20 Gew.-% – bezogen jeweils auf die pastös verformbare Masse aus Wasser, polymerem Bindemittel und zu agglomerierendem Feststoff – . Ganz besonders bevorzugt kann es sein, mit Bindemittelgehalten im Bereich von etwa 2 bis 10 Gew.-% zu arbeiten.

Die Konzentration des polymeren Bindemittels und sein mittleres Molekulargewicht beeinflussen die Viskosität des formgebend zu verarbeitenden Mehrstoffgemisches aus Wasser, Bindemittel und feinteiligen Feststoffen. Je nach der im nachfolgenden noch zu schildernden Verfahrensmethodik kann die Viskosität des Mehrstoffgemisches in einem breiten Bereich gewählt werden. Geeignet sind beispielsweise Viskositäten der Feststoffaufschlämmungen im Bereich von etwa 100 bis 2 Mio. mPas. Als besonders geeignet haben sich fließfähige bis pastös verformbare Feststoffaufschlämmungen erwiesen, die auf etwa 20 bis 90 Gew.-% Wasser, etwa 1 bis 15 Gew.-% polymere Bindemittel und etwa 10 bis 60 Gew.-% feinteiligen Feststoff enthalten, wobei jeweils die hier angegebenen Gewichtsprozente sich auf das Dreistoffgemisch aus Wasser, Bindemittel und feinteiligem Feststoff beziehen.

Zur formgestaltenden Verarbeitung der Bindemittel und feinteiligen Feststoff enthaltenden Suspensionen kommen insbesondere zwei Verfahrenstypen in Betracht :

In einer ersten Ausführungsform arbeitet man mit vergleichsweise dünnflüssigen Feststoffaufschlämmungen, deren Viskosität bevorzugt im Bereich von etwa 100 bis 4.000 mPas liegt. Fließfähige Massen dieser Art können nach hinreichender Homogenisierung durch Eintropfen dieses Mehrphasengemisches in eine Lösung der fällenden Metallionen formgestaltet verfestigt werden. Je nach den im einzelnen gewählten Verfahrensbedingungen fallen dann in der Regel linsen- bis kugelförmige Reaktionskörper an, die ihre Formgestalt unmittelbar beim Eintreten in die wäßrige Lösung der fällenden Kationen annehmen und im weiteren Verfahrensverlauf im wesentlichen beibehalten. Je nach den gewählten Verfahrensbedingungen können weitgehend gefüllte ggf. auch hohlkugelartige Fällungsprodukte der geschilderte Art erhalten werden.

Das erfindungsgemäße Verfahrensprinzip läßt sich in einer zweiten Ausführungsform aber auch derart verwirklichen, daß vergleichsweise hochviskose, Bindemittel und feinteilige Feststoffe enthaltende Aufschlämmungen unter Einwirkung mechanischer Kräfte verformt und dann gewünschtenfalls nach einer Zerkleinerung in die kationische Fällösung eingetragen werden. So können beispielsweise fadenartige Stränge als solche oder nach vorheriger Zerkleinerung in die Lösung der fällenden Kationen eingebracht und dort durch Vernetzung des Bindemittels mittels Salzbildung verfestigt werden. Gewünschtenfalls kann eine weiterführende Zerkleinerung des verfestigten Materials auch nach der Behandlung im kationischen Fällbad erfolgen.

Die zur Vernetzung des polymeren Bindemittels mittels Salzbildung eingesetzte zweite Reaktionskomponente ist die bevorzugt wäßrige Lösung solcher Salze, deren Kationen mit den funktionell anionisch reagierenden Säuregruppierungen des polymeren Bindemittels unter Ausbildung unlöslicher Salze reagieren. Geeignet sind hier praktisch beliebige mehrwertige Metallkationen, wobei aus Stabilitätsgründen und/oder Überlegungen zum beabsichtigen Einsatzzweck der verfestigten Massen ausgewählten Kationen besondere Bedeutung zukommen kann. Genannt seien in diesem Zusammenhang insbesondere Calcium, Barium, Magnesium, Aluminium und/oder Schwermetalle wie Eisen, Chrom, Zink, Nickel und/oder Cobalt. Als ganz besonders wirksam hat sich das zweiwertige Kupfer herausgestellt, das beispielsweise als wäßrige Sulfatlösung für zahlreiche Anwendungszwecke zu optimalen Ergebnissen führt.

Die zur Fällung eingesetzten wäßrigen Metallsalzlösungen können die entsprechenden Salze mit den fällenden mehrwertigen Metallionen in Mengen von etwa 1 Gew.-% bis zur Sättigung, insbesondere im Bereich von etwa 3 bis 20 Gew.-%, enthalten. Etwa 10 Gew.-%ige Kupfersulfat-Lösungen haben sich als ein sehr universales Fällungsmittel für das Verfahren der Erfindung herausgestellt. Dem Anion der fällenden Salzlösung kommt in der Regel keine besondere Bedeutung zu, sofern nicht unerwünschte Störungen durch Abreaktion mit anderen Bestandteilen des mehrkomponentigen Gemisches aufgrund allgemeinen chemischen Wissens von vornherein auszuschließen sind.

Als Fällungstemperatur für die Umsetzung der beiden erfindungsgemäß eingesetzten Reaktionslösungen bietet sich praktisch der gesamte brauchbare Temperaturbereich wäßriger Lösungen an, insbesondere also kann die Fällungstemperatur im Bereich von etwa 0 bis 80°C liegen.

Der Mindestgehalt, der als Fällflüssigkeit eingesetzten Salzlösung an fällenden Kationen ist durch stöchiometrische Überlegungen in Abstimmung mit dem Gehalt an Säuregruppen aus der anderen Reaktionskomponente festzulegen. Es müssen dabei nicht notwendigerweise stöchiometrisch gleiche Mengenverhältnisse zum Einsatz kommen. Schon die anteilsweise Vernetzung der Säuregruppen im polymeren Bindemittel durch mehrwertige Kationen kann eine hinreichende Verfestigung des Bindemittels und damit der formgestalteten Masse ergeben. Es kann allerdings bevorzugt sein, mit wenigstens etwa stöchiometrischen Mengen an fällendem Kation in der Fällungslösung – bezogen auf zu verfestigendes Bindemittel mit Aniongehalt – zu arbeiten. Im allgemeinen wird die Konzentration dieser fällenden Kationen im Überschuß gewählt werden.

In einer wichtigen Ausführungsform des erfindungsgemäßen Verfahrens bringt man die formgestaltenden Bindemittel und die zu agglomerierenden Feststoff enthaltende Reaktionskomponente in einen hinreichenden Überschuß an wäßriger Fällungslösung und läßt gewünschtenfalls die zu verfestigende Masse einige Zeit in dieser Fällungslösung verweilen. Als geeignet haben sich beispielsweise Volumenverhältnisse der zu verfestigenden Masse zur Fällungslösung im Bereich von etwa 1 : 2 bis 1 : 10 Volumenteilen erwiesen. Hier ist sichergestellt, daß die beispielsweise kornförmig oder kugelförmig in die Fällungslösung eingetragene erste Reaktionskomponente voll von einem Überschuß der fällenden Kationen umspült und gewünschtenfalls durchdringend benetzt wird. Diese Ausführungsform ist insbesondere geeignet für vergleichsweise fließfähige bzw. dünnpastöse Reaktionsmassen, die beispielsweise in die fällende Kationlösung eingetropft werden. In anderen Ausführungsformen der Erfindung ist es allerdings auch möglich, vergleichsweise feste formgestaltete Reaktionsmassen auf Basis von polymerem Bindemittel, wäßriger Phase und zu agglomerierendem Feststoff herzustellen und diese Massen nach Formgebung. z.B. in dünner Schichtlage mit der Lösung der fällenden Kationen in hinreichender Menge zu besprühen.

Wie bereits angegeben kann es wünschenswert sein, das gefällte und verfestigte Gut für einen gewissen Zeitraum in Kontakt mit der die fällenden Metallionen enthaltenden Lösung zu halten, um eine durchdringende Vermischung der beiden Flüssigphasen und damit eine durchdringende Salzbildung im Feststoffkörper auszulösen. Die verfestigten und von dem Überschuß der Fällungslösung abgetrennten Formkörper können gewünschtenfalls gewaschen und getrocknet werden.

Für bestimmte Einsatzzwecke kann eine nachfolgende Modifikation der Oberfläche der verfestigten Formkörper zweckmäßig sein. Es hat sich gezeigt, daß je nach den gewählten Verarbeitungsbedingungen Formkörper mit mehr oder weniger glatten bzw. geschlossenen Oberflächen anfallen können. Sind Formkörper entstanden, deren Oberfläche in unerwünschtem Maß geglättet und geschlossen sind, so kann durch einfache mechanische und/oder chemische Behandlung die Oberfläche porig geöffnet und damit der vorherigen Gesamtstruktur des entstandenen Materials angepaßt werden. Geeignet ist beispielsweise das einfache Rollen eines korn- bzw. kugelförmig angefallenen Feststoffgutes in Masse, wobei es nur eines minimalen Abriebes auf der Kornoberfläche bedarf, um den unmittelbaren Zutritt zur porigen Innenstruktur des Korns bzw. der Kugeln wieder zu eröffnen. Aber auch die Behandlung mit geeigneten Lösungsmitteln führt zu gleichem Ergebnis.

Wird eine Nachreaktion der durch Salzbildung spontan verfestigten Formkörper in der Fällösung gewünscht, so kann das gefällte Gut in der Fällösung beispielsweise für den Zeitraum bis zu einer Stunde, vorzugsweise bis zu 45 Minuten oder weniger belassen werden. Im allgemeinen reicht eine Verweilzeit von 20 bis maximal 30 Minuten, um kornförmiges Material mit einer mittleren Korngröße im Bereich bis etwas 10 mm durchdringend zu härten.

Die Erfindung betrifft damit insbesondere die Anwendung des geschilderten formgestaltenden Agglomerationsverfahrens zur Herstellung von rieselfähigen gekörnten Massen mit durchschnittlichen Korngrößen im Bereich etwa 1 bis 10 mm und vorzugsweise im Bereich von etwa 2 bis 7 mm aus feinpulvrigen Einsatzmaterialien, deren ursprüngliche Korngröße praktisch beliebig fein sein kann.

Spezielle Beispiele für solche zu agglomerierende feinteilige Feststoffe leiten sich aus dem beabsichtigten Einsatzzweck der erfindungsgemäß hergestellten Formlinge ab. Bedeutung besitzen hier typische Katalysatorkomponenten, beispielsweise unlösliche Verbindungen bzw. feinpulverige Metalle auf Basis Platin, Palladium, Rhodium, Nickel, in Abwesenheit oder in Gegenwart von Trägern wie Aktivkohle, Kieselgur, aber auch Aluminiumoxid, Calciumcarbonat und dergleichen. Oxydische Katalysatorkomponenten, beispielsweise von der Art des Kupferchromits, die sich durch Unlöslichkeit in Wasser auszeichnen, sind für die Verarbeitung nach dem erfindungsgemäßen Verfahren ebenfalls besonders geeignet. Geeignete mehrwertige Metallsalze für die Fällungslösung sind neben dem bereits genannten Kupfersulfat beispielsweise Aluminiumchlorid, Calciumchlorid bzw. entsprechende Sulfatsalze, aber auch entsprechende Salzlösungen von 2- bzw. 3-wertigem Eisen, Chrom, Mangan und Barium.

Nach einer bevorzugten Ausführungsform der Erfindung wird das Verfahren zur Agglomerierung von Aktivkohle bzw. Aktivkohle enthaltenden Stoffgemischen zu entsprechenden, beispielsweise Schwermetalle enthaltenden Katalysatoren in Kornform eingesetzt.

Besonders geeignete anionische Polymere für die Verwendung als wasserlösliche Bindemittel sind Ethylen-Maleinsäureanhydrid-Copolymerisate mit einem Gehalt an Maleinsäureanhydrid bis etwa 50 mol-% und Vinylmethylether-Maleinsäureanhydrid-Copolymerisate vergleichbaren Maleinsäureanhydridgehalts. Eine geeignete polymere Sulfonsäureverbindung ist beispielsweise die Poly-2-acrylamido-2-methyl-propansulfonsäure.

Zur Herstellung besonders geeigneter Feststoffaufschlämmungen werden in einer ersten Stufe Polymerlösungen der genannten Art durch Zugabe von wäßriger Natronlauge auf pH-Werte im Bereich von etwa 10 bis 13 eingestellt, woraufhin die zu agglomerierenden Feststoffe eingearbeitet werden. Diese Feststoffaufschlämmungen werden dann in das fällende kationenenthaltende Fällbad – beispielsweise in eine 5 bis 15 Gew.-% Kupfersulfat enthaltende wäßrige Lösung – eingegeben, wobei das Volumen-Verhältnis der wäßrigen Fällösung zum Volumen des zu vernetzenden Materials bevorzugt im Bereich von etwa 10 : 1 bis 2 : 1 liegt. Das gefällte körnige Gut kann beispielsweise 15 Minuten im Fällbad lagern, wobei das Einhalten leicht erhöhter Temperaturen (40 bis 60°C) vorteilhaft sein kann. Anschließend wird die überschüssige Fällösung abgetrennt und das gefällte und erhärtete Material mit Wasser gewaschen und getrocknet. Die Trocknung der Formlinge kann beispielsweise in Umluft bei Temperaturen oberhalb von 100°C erfolgen. Durch kurzfristiges Walzen auf einer Rollbank oder durch kurzfristige Lagerung in einer 0,1 %igen Ammoniaklösung können ursprünglich glänzend erscheinende Oberflächen in matt-porös erscheinende Oberflächen umgewandelt werden.

Die nachfolgenden Beispiele geben typische Arbeitsanweisungen für die Herstellung von körnigen Massen, die etwa in Form von Filterbetten oder Katalysatorbetten Verwendung finden können.

## Beispiele

### 1. Allgemeines Verfahren zur Darstellung von getropften Formkörpern

Benötigte Substanzen :

Polymere : Carboxymethylcellulose CMC (Henkel, Typ CMC/Relatin 7000)

Ethylenmaleinsäureanhydrid-Copolymerisat (Monsanto, Typ EMA 21)

Vinylmethylether-maleinsäureanhydrid-Copolymerisat (GAF, Typ Gantrez AN 139)
destilliertes Wasser
Natriumhydroxid/50%ige Lösung
Kupfer II sulfat × 5 Wasser (MG 249.68)

Arbeitsweise :

CMC wird in Wasser gelöst. Die erhaltene Lösung weist einen pH von 7-8 auf. EMA 21 oder Gantrez AN 139 wurden in destilliertes Wasser verrührt und das Gemisch mit 50%iger Natronlauge (pH Meter) auf pH 11,0 eingestellt.

Je nach Rührbedingung und Ansatzgröße erwärmte sich die Polymerlösung auf 45-50°C. In diese warme Lösung wird der jeweilige Feststoff portionsweise eingegeben und dispergiert.

In Abhängigkeit von der Ansatzgröße hat sich folgende Verfahrensweise als sinnvoll herausgestellt :

| Slurrymenge | Rührerart | Rührerdrehzahl/ UpM | Dispergierzeit/ min. |
|---|---|---|---|
| 100 g | Propellerrührer | 2000 | 10 |
| 6000 g | Dissolver Ø 80 mm | 2800 | 20 |

Nach dem Dispergieren wird der warme Slurry je nach Viskosität auf ein V4A Gefäß mit Lochboden Durchmesser 2 bzw. 4 mm gegeben und in eine wäßrige Lösung mehrwertiger Kationen getropft.

Die Formkörper wurden nach einer Fällbadlagerung von 15 Minuten durch Absaugen und anschließender Wasserwäsche isoliert. Die feuchten Formlinge wurden bei 125°C im Trockenschrank (Umluft) getrocknet.

## 1.1 Slurry-pH-Variation

Am Beispiel der Herstellung von Formlingen aus Kupferchromitpulver wurde exemplarisch der Einfluß des pHs des verwendeten Slurries auf die Formlingeigenschaften gezeigt.

Durch die Dispergierung von Kupferchromit (BET = 25-47m²/g) in die wäßrige Polymerlösung von pH 11,0 tritt eine pH-Verschiebung auf 9,0-9,4 ein : Bei einer gezielten Erhöhung des pHs auf 9-11 sank jedoch die Kugelfestigkeit ab, so daß nur mit Slurries bei pH 9 weitergearbeitet wurde.

## 1.2 Variation der Fällbadmenge

Bei der Herstellung von Kupferchromitformlingen durch Tropfen eines Kupferchromit/Polymer-Slurries in Kupfersulfatlösung wurde der Einfluß der verwendeten Fällbadmenge auf die Formlingeigenschaften bestimmt.

## Grundrezepturen :

| 1) | EMA 21 | Wasser/NaOH | K13/Cu-Cr-Katalysator |
|----|--------|-------------|----------------------|
|    | 6 %    | 54 %        | 40 %                 |

| 2) | Gantrez AN 139 | Wasser/NaOH | K13/Cu-Cr-Katalysator |
|----|----------------|-------------|----------------------|
|    | 5 %            | 55 %        | 40 %                 |

Es wurden jeweils 100 g Slurry in unterschiedlichen Mengen 10%iger CuSO₄-Lösungen getropft.

| Slurry nach Grund-rezep-tur | Volumenverhältnis Slurry : $CuSO_4$-Lösung | | Düsendurch-messer/ mm | Beurteilung der Form-linge nach Trocknung bei 125°C | Festigkeit in N bei Raumtempe-ratur |
|---|---|---|---|---|---|
| 1 | 1 : | 10 | 3 | Kugeln | 22 |
|   | 1 : | 7,5 | 3 | Kugeln | 22 |
|   | 1 : | 5 | 3 | Kugeln | 25 |
|   | 1 : | 5 | 2 | Kugeln | 23 |
|   | 1 : | 4 | 3 | Kugeln | 20 |
|   | 1 : | 3 | 3 | Kugeln | 20 |
|   | 1 : | 2 | 3 | Kugeln z.T. geplatzt | 20 |
|   | 1 : | 1 | 3 | Kugeln z.T. geplatzt | 15 |
| 2 | 1 : | 10 | 2 | Kugeln | 17 |
|   | 1 : | 5 | 2 | Kugeln | 15 |
|   | 1 : | 3 | 2 | Kugeln | 15 |

Aus der Tabelle ist ersichtlich, daß eine Fällbadmengenreduzierung bis zum Verhältnis Slurry : $CuSO_4$-Lösung wie 1 : 3 möglich ist. Mengenreduzierungen zum Verhältnis 1 : 2 bzw. 1 : 1 erwiesen sich als nachteilig auf die Kugelstabilität (zum Teil geplatzte Formlinge).

In den im Folgenden detailliert beschriebenen Versuchen wird der Slurry generell in das 10 fache Fällbadvolumen getropft.

### 1.3 Festigkeit (N) der Kupferchromitformlinge in Abhängigkeit der Kupfersulfat-Konzentration im Fällbad

Gearbeitet wurde mit den Grundrezepturen wie unter Punkt 1.2 mit den Bezeichnungen 1) und 2) beschrieben.

Jeweils 100 g Slurry wurden in 1 l Fällbad aus Kupfersulfat der folgenden Konzentrationen getropft und die Formkörper beurteilt.

| Slurry nach Grund- rezeptur | Konzentration des Fällbades bezogen auf CuSO₄/Gew.% | Beurteilung der Formkörper | x)Härte in N |
|---|---|---|---|
| 1 | 15,0 | Kugeln | 10 |
| | 13,5 | Kugeln | 21 |
| | 10,0 | Kugeln | 25 |
| | 9,0 | Kugeln | 18 |
| | 8,0 | Kugeln | 15 |
| | 7,0 | Kugeln geplatzt | - |
| | 6,0 | Kugeln geplatzt | - |
| | 5,0 | Kugeln geplatzt | - |
| 2 | 15,0 | Kugeln | 10 |
| | 13,5 | Kugeln | 17 |
| | 10,0 | Kugeln | 17 |

x) Die Härte der Formkörper wurde mit dem Meßgerät für Tabletten-Druckfestigkeit "Modell 4M" der Firma Dr. Schleuniger Productronic AG. bestimmt. Gemessen wurde bei konstanter und definierter Belastungsgeschwindigkeit von 20 N/Sek. durch geregelten Antrieb (Meßbereich : 5-300 N).

Wie aus der Tabelle ersichtlich ist, bewirkt eine 10%ige $CuSO_4$-Fällbadkonzentration die besten Eigenschaften hinsichtlich der Härte (N) und Formkörperstabilität.

Zu hohe bzw. zu niedrige $CuSO_4$-Fällbadkonzentration führen zu verminderten Festigkeiten der Formkörper.

1.4 Austausch von $CuSO_4$ durch andere Kationen

Die in der Rezeptur bekannten Polymer/Katalysator-Dispersionen wurden in folgenden zwei- und dreiwertigen kationischen Lösungen (10%ig) getropft und isoliert :

$Ba^{2+}$ ; $Ni^{2+}$ ; $Fe^{2+}$ ; $Fe^{3+}$ ; $Zn^{2+}$ ; $Ca^{2+}$ ; $Mn^{2+}$ ; $Cr^{3+}$ ; $Co^{2+}$ ; $Al^{3+}$

Es wurde festgestellt, daß alle aufgeführten Kationen-Lösungen als Fällbad für die Katalysatorformlinge mehr oder weniger geeignet sind. Vorzugsweise kommen $Ca^{2+}$, $Al^{3+}$, $Fe^{2+}$ und $Fe^{3+}$ Salzlösungen in Betracht.

1.5 Aktivitätserhöhung der Formkörper

Nach der beschriebenen Verfahrensweise wurden Formkörper hergestellt und partiell zur Erhöhung der Aktivität einer mechanischen oder einer chemischen Oberflächenbehandlung unterzogen.
a) mechanische Behandlung : 30 Min. walzen auf einer Rollbank (Multifix)
b) chemische Behandlung : 5 Min. Lagerung in einer 0,1%igen Ammoniaklösung.
Visuell hatten sich die ursprünglich glänzenden Oberflächen in "matt-porös" verändert.
Falls in den folgenden beschriebenen Versuchen nicht ausdrücklich anders festgelegt, wird dort mit Fällbadkonzentrationen von 10 Gew.-% gearbeitet. Bei den folgenden Versuchen wurden daher ausschließlich folgende Parameter variiert :
1. Polymer
2. Polymerkonzentration im Slurry
3. Feststoffpartikel

4. Konzentration der Feststoffpartikel

5. Gegenioneffekt

## 2. Formkörper hergestellt mit CMC als Bindemittel

| Zusammensetzung des Slurries | | | Fällbad | Formkörper | |
|---|---|---|---|---|---|
| CMC | Feststoff | | Kation | Art | Festigkeit |
| Gew.-% Art | | Gew.-% | | | /N |
| 1,0 | Cu-Chromit | 25 | $Cu^{2+}$ | Kugeln | 8,6 |
| 1,0 | Cu-Chromit | 17 | $Cu^{2+}$ | Kugeln | 8,0 |
| 1,0 | Cu-Chromit | 10 | $Cu^{2+}$ | Kugeln | 5,0 |
| 1,0 | Cu-Chromit | 25 | $Fe^{2+}$ | Linsen | 6,0 |
| 1,0 | Cu-Chromit | 25 | $Al^{3+}$ | Linsen | 5,0 |

. . .

## 3. Formkörper hergestellt mit EMA 21 als Bindemittel

| Zusammensetzung des Slurries | | | Fällbad | Formkörper | |
|---|---|---|---|---|---|
| EMA 21 | Feststoff | | Kation | Art | Festigkeit |
| Gew.-% | Art | Gew.-% | | | / N |
| 3,0 | Cu-Chromit | 35 | $Cu^{2+}$ | Linsen | 4 |
| 3,0 | Cu-Chromit | 40 | $Cu^{2+}$ | Linsen | 7 |
| 3,0 | Cu-Chromit | 45 | $Cu^{2+}$ | Linsen | 22 |
| 4,5 | Cu-Chromit | 40 | $Cu^{2+}$ | Kugeln | 17 |
| 4,5 | Cu-Chromit | 45 | $Cu^{2+}$ | Kugeln | 34 |
| 6,0 | Cu-Chromit | 35 | $Cu^{2+}$ | Kugeln | 13 |
| 6,0 | Cu-Chromit | 40 | $Cu^{2+}$ | Kugeln | 25 |
| 6,0 | A-Kohle | 30 | $Cu^{2+}$ | Kugeln | 12 |
| 6,5 | Ni/A-Kohle | 35,5 | $Cu^{2+}$ | Kugeln | 17 |
| 6,6 | Pd/A-Kohle | 31,6 | $Cu^{2+}$ | Kugeln | 12 |
| 6,0 | $Ni/SiO_2$ | 35 | $Cu^{2+}$ | Kugeln | 12 |
| 6,0 | $CaCO_3$ | 40 | $Ca^{2+}$ | Kugeln | 37 |
| 7,0 | A-Kohle | 30 | $Ca^{2+}$ | Kugeln | 23 |
| 6,3 | A-Kohle | 31,6 | $Cu^{2+}$ | Kugeln | 11 |
| 6,0 | $Al_2O_3$ | 40 | $Ca^{2+}$ | Kugeln | 15 |
| 6,0 | Cu-Chromit | 40 | $Ca^{2+}$ | Kugeln | 10 |
| 6,0 | Cu-Chromit | 40 | $Al^{3+}$ | Kugeln | 14 |
| 6,0 | Cu-Chromit | 40 | $Fe^{2+}$ | Kugeln | 20 |
| 6,0 | Cu-Chromit | 40 | $Fe^{3+}$ | Kugeln | 11 |

. . .

4 . Formkörper hergestellt mit Gantrez AN139 als Bindemittel

| Zusammensetzung des Slurries | | | Fällbad | Formkörper | |
|---|---|---|---|---|---|
| Gantrez AN139 Gew.-% | Feststoff Art | Gew.-% | Kation | Art | Festigkeit /N |
| 4,0 | Cu-Chromit | 45 | $Cu^{2+}$ | Kugeln | 19 |
| 4,0 | Cu-Chromit | 50 | $Cu^{2+}$ | Kugeln | 30 |
| 5,0 | Cu-Chromit | 40 | $Cu^{2+}$ | Kugeln | 18 |
| 6,0 | Cu-Chromit | 35 | $Cu^{2+}$ | Kugeln | 11 |
| 8,0 | Cu-Chromit | 35 | $Cu^{2+}$ | Kugeln | 6 |
| 4,7 | A-Kohle | 28,5 | $Cu^{2+}$ | Kugeln | 8 |
| 5,5 | Ni/A-Kohle | 33 | $Cu^{2+}$ | Kugeln | 8 |
| 4,6 | Pd/A-Kohle | 27 | $Cu^{2+}$ | Kugeln | 5 |
| 5,7 | Rh/A-Kohle | 24 | $Cu^{2+}$ | Kugeln | 15 |
| 5,0 | Pt/A-Kohle | 40 | $Cu^{2+}$ | Kugeln | 2 |
| 5,0 | $Ni/SiO_2$ | 35 | $Cu^{2+}$ | Kugeln | 14 |
| 5,0 | $CaCO_3$ | 40 | $Ca^{2+}$ | Kugeln | 25 |
| 5,0 | $CaCO_3$ | 40 | $Cu^{2+}$ | Kugeln | 10 |
| 5,0 | $Al_2O_3$ | 40 | $Al^{3+}$ | Kugeln | 8 |
| 5,0 | $Al_2O_3$ | 40 | $Ca^{2+}$ | Kugeln | 5 |
| 5,9 | A-Kohle | 30 | $Ca^{2+}$ | Kugeln | 11 |
| 5,0 | Cu-Chromit | 40 | $Ca^{2+}$ | Linsen | 8 |
| 5,0 | Cu-Chromit | 40 | $Al^{3+}$ | Kugeln | 4 |
| 5,0 | Cu-Chromit | 40 | $Fe^{2+}$ | Kugeln | 9 |
| 5,0 | Cu-Chromit | 40 | $Fe^{3+}$ | Kugeln | 11 |

. . .

## 5. Herstellung von Katalysatorformlingen mit CuCO₃/ZnCO₃

Die Darstellung erfolgte wie unter Punkt 1 beschrieben

| Polymere | % | Katalysator | % | Festigkeit |
|---|---|---|---|---|
| Gantrez AN 139 | 5 | Cu/Zn | 40 | poröse Kugeln |
| EMA 21 | 6 | Cu/Zn | 40 | poröse Kugeln |

Noch im Fällbad lagen die Katalysatorformlinge mit stabiler, geschlossener Oberfläche vor. Erst nach der Trocknung bei 100-125°C wurden die Kugeln porös und instabil.

**Ansprüche**

1. Verfahren zur formgestaltenden Agglomerierung von feinteiligen, in einer Flüssigphase suspendierten Feststoffpartikeln unter Mitverwendung eines Bindemittels dadurch gekennzeichnet, daß man als Bindemittel in der Flüssigphase lösliche Polymere einsetzt, die zur Bildung unlöslicher Salze geeignete Säuregruppen aufweisen, welche auch in Form löslicher Salze vorliegen können, daß man weiterhin die Bindemittel, Flüssigphase und zu agglomerierenden Feststoffpartikel zu einer pastös verformbaren Masse aufbereitet und diese Masse formgestaltet mit einer Lösung solcher Kationen vereinigt, die mit den Säuregruppen des polymeren Bindemittels zum unlöslichen Festkörper reagieren, wobei man als zu agglomerierendes unlösliches Gut pulver- bis rieselförmige Feststoffe bzw. Feststoffgemische z.B. auf Basis Metallpulver unlösliche Metallverbindungen wie Metalloxide, -sulfide, unlösliche Metallsalze und/oder Aktivkohle, einsetzt.

2. Verfahren nach Anspruch 1 dadurch gekennzeichnet, daß man miteinander mischbare Flüssigkeiten in der pastösen Masse und der die abreagierenden Kationen enthaltenden Flüssigphase einsetzt.

3. Verfahren nach Ansprüchen 1 und 2 dadurch gekennzeichnet, daß man mit wäßrigen bzw. wäßrig/organischen Flüssigphasen, insbesondere mit Wasser in den beiden Reaktionspartnern arbeitet.

4. Verfahren nach Ansprüchen 1 bis 3 dadurch gekennzeichnet, daß man als Bindemittel Polymerverbindungen natürlichen und/oder synthetischen Ursprungs einsetzt, die als salzbildende Gruppen insbesondere Carboxylgruppen und/oder Sulfosäuregruppen enthalten.

5. Verfahren nach Ansprüchen 1 bis 4 dadurch gekennzeichnet, daß als Bindemittel natürlichen Ursprungs lösliche, insbesondere wasserlösliche Polysaccharidderivate mit salzbildenden Gruppen, bevorzugt von der Art der Carboxymethylcellulose, Carboxymethylstärke und/oder Carboxymethyl substituierten Guarverbindungen eingesetzt werden.

6. Verfahren nach Ansprüchen 1 bis 4 dadurch gekennzeichnet, daß man als synthetische Bindemittel lösliche, insbesondere wasserlösliche Polymere einsetzt, die bevorzugt Carboxyl- bzw. Carboxylatgruppen enthalten und die insbesondere Homo- und/oder Copolymere niederer olefinisch ungesättigter Mono- und/oder Dicarbonsäuren sind.

7. Verfahren nach Ansprüchen 1 bis 6 dadurch gekennzeichnet, daß man die polymeren Bindemittel wenigstens anteilsweise in Form ihrer wasserlöslichen Alkali-, Ammonium- und/oder Amin- bzw. Polyaminsalze einsetzt.

8. Verfahren nach Ansprüchen 1 bis 7 dadurch gekennzeichnet, daß man zur Umwandlung des gelösten polymeren Bindemittels in die unlösliche Form durch Salzbildung mehrwertige Metallkationen, insbesondere Calcium, Barium, Aluminium und/oder Schwermetalle wie Eisen, Chrom, Zink, Nickel, Cobalt und/oder insbesondere Kupfer einsetzt.

9. Verfahren nach Ansprüchen 1 bis 8 dadurch gekennzeichnet, daß wasserlösliche polymere Bindemittel mit mittleren Molekulargewichten (Mn) von 500 bis 5 Mio. insbesondere von 1000 bis 500000 eingesetzt werden, wobei Festkörpergehalte des polymeren Bindemittels – bezogen auf die pastös verformbare Masse – im Bereich von 1 bis 30 Gew.-%, vorzugsweise von 2 bis 20 Gew.-% und insbesondere im Bereich von 2 bis 10 Gew.-% bevorzugt sein können.

10. Verfahren nach Ansprüchen 1 bis 9 dadurch gekennzeichnet, daß polymere Bindemittel mit einem Gehalt an Säuregruppen aufweisenden Monomer-Elementen von wenigstens etwa 5 mol-%, vorzugsweise wenigstens von etwa 20 mol-% eingesetzt werden, wobei als temperaturstabile Copolymere insbesondere 20 bis 60 mol-% niedere Carbonsäureeinheiten copolymerisiert mit Ethylen, Propylen und/oder Methylvinylether vorliegen.

11. Verfahren nach Ansprüchen 1 bis 10 dadurch gekennzeichnet, daß Feststoffaufschlämmungen einer Viskosität im Bereich von 100 bis 2 Mio mPas eingesetzt werden.

12. Verfahren nach Ansprüchen 1 bis 11 dadurch gekennzeichnet, daß wäßrige, die fällenden Metallionen enthaltende Lösungen mit Gehalten der fällenden Metallionen von etwa 1 Gew.-% bis zur Sättigung, insbesondere im Bereich von 3 bis 20 Gew.-% verwendet werden.

13. Verfahren nach Ansprüchen 1 bis 12 dadurch gekennzeichnet, daß man vergleichsweise dünnflüssige Feststoffaufschlämmungen (bevorzugte Viskosität im Bereich von 100 bis 4000 mPas) durch Eintropfen in die Lösung der fällenden Metallionen formgestaltet verfestigt, während höher-viskose Massen durch Einwirkung mechanischer Kräfte – z.B. durch Extrusion – formgestaltet und mit der Fälllösung vereinigt, z.B. in diese eingetragen werden, woraufhin gewünschtenfalls das gefällte und verfestigte Gut nachfolgend einer weiteren formgebenden Verarbeitung – insbesondere einer Zerkleinerung – zugeführt werden kann.

14. Verfahren nach Ansprüchen 1 bis 13 dadurch gekennzeichnet, daß man die Fällung bei Temperaturen von 0 bis 80°C durchführt.

15. Verfahren nach Ansprüchen 1 bis 14 dadurch gekennzeichnet, daß man das gefällte und verfestigte Gut in Kontakt mit der fällenden Metallionen enthaltenden Lösung für einen beschränkten Zeitraum von z.B. bis zu etwa 45 Minuten nachreagieren läßt und dann bevorzugt vor einer weiteren Bearbeitung auswäscht und gewünschtenfalls trocknet.

16. Verfahren nach Ansprüchen 1 bis 15 dadurch gekennzeichnet, daß man die Oberfläche des formgestaltet verfestigten Gutes durch mechanische und/oder chemische Behandlung modifiziert, insbesondere aufrauht.

17. Verfahren nach Anspruch 16 dadurch gekennzeichnet, daß man das korn- bzw. kugelförmig verfestigte Gut in Masse kurzfristig rollt.

18. Anwendung des formgestaltenden Agglomerationsverfahrens nach Ansprüchen 1 bis 19 zur Herstellung von rieselfähigen gekörnten Massen mit durchschnittlichen Korngrößen im Bereich von 1 bis 10 mm vorzugsweise 2 bis 7 mm aus einem feinpulvrigen Einsatzmaterial.

19. Anwendung nach Anspruch 18 dadurch gekennzeichnet, daß das Verfahren zur Agglomerierung von Aktivkohle bzw. Aktivkohle enthaltenden Stoffgemischen zu entsprechenden, beispielsweise Schwermetalle enthaltenden Katalysatoren in Kornform eingesetzt wird.

## Claims

1. A process for the shaping agglomeration of finely divided particulate solids suspended in a liquid phase using a binder, characterized in that the binders used are polymers which are soluble in the liquid phase and which contain acid groups suitable for forming insoluble salts which may even be present in the form of soluble salts and in that the binders, liquid phase and solid particles to be agglomerated are worked up into a paste-like formable mass which is then combined with the acid groups of the polymeric binder to form the insoluble solid, powder-form to free-flowing solids or mixtures of such solids, for example based on metal powders, insoluble metal compounds, such as metal oxides, sulfides, insoluble metal salts and/or active carbon, being used as the insoluble material to be agglomerated.

2. A process as claimed in claim 1, characterized in that inter-miscible liquids are used in the paste-like mass and in the liquid phase containing the reacting cations.

3. A process as claimed in claims 1 and 2, characterized in that aqueous or aqueous/organic liquid phases, more especially water, are used in the two reactants.

4. A process as claimed in claims 1 to 3, characterized in that polymer compounds of natural and/or synthetic origin containing in particular carboxyl and/or sulfonic acid groups as salt-forming groups are used as binders.

5. A process as claimed in claims 1 to 4, characterized in that soluble, more especially water-soluble polysaccharide derivatives containing salt-forming groups, preferably of the carboxymethyl cellulose, carboxymethyl starch and/or carboxymethyl-substituted guar compound type, are used as binders of natural origin.

6. A process as claimed in claims 1 to 4, characterized in that the synthetic binders used are soluble, more especially water-soluble polymers which preferably contain carboxyl or carboxylate groups and which are more particularly homopolymers and/or copolymers of lower olefinically unsaturated mono- and/or dicarboxylic acids.

7. A process as claimed in claims 1 to 6, characterized in that the polymeric binders are used at least partly in the form of their water-soluble alkali, ammonium and/or amine or polyamine salts.

8. A process as claimed in claims 1 to 7, characterized in that polyvalent metal cations, more especially calcium, barium, aluminium and/or heavy metals such as iron, chromium, zinc, nickel, cobalt and/or in particular copper, are used for converting the dissolved polymeric binders into the insoluble form by salt formation.

9. A process as claimed in claims 1 to 8, characterized in that water-soluble polymeric binders having average molecular weights (Mn) of from 500 to 5,000,000 and preferably from 1,000 to 500,000 are used, solids contents of the polymeric binders – based on the paste-like formable mass – of from 1 to 30% by weight and preferably from 2 to 20% by weight and more preferably from 2 to 10% by weight being established.

10. A process as claimed in claims 1 to 9, characterized in that polymeric binders containing at least about 5 mol-% and preferably at least 20 mol-% monomer elements containing acid groups are used, approximately 20 to 60 mol-% lower carboxylic acid units copolymerized with ethylene, propylene and/or methyl vinyl ether being present as temperature-stable copolymers.

11. A process as claimed in claims 1 to 10, characterized in that solids suspensions having a viscosity of from 100 to 2,000,000 mPa.s are used.

12. A process as claimed in claims 1 to 11, characterized in that aqueous solutions containing the precipitating metal ions in quantities of from about 1% by weight to saturation and more especially in quantities of from 3 to 20% by weight are used.

13. A process as claimed in claims 1 to 12, characterized in that comparatively thin-flowing solids suspensions (preferred viscosity in the range from 100 to 4,000 mPa.s) are solidified in shaped form by dropwise addition to the solution of precipitating metal ions while masses of relatively high viscosity are shaped by the action of mechanical forces, for example by extrusion, and combined with the precipitation solution, for example by introduction therein, after which the precipitated and solidified material may if desired be subjected to further shaping, more especially size reduction.

14. A process as claimed in claims 1 to 13, characterized in that the precipitation is carried out at temperatures of from 0 to 80°C.

15. A process as claimed in claims 1 to 14, characterized in that the precipitated and solidified material is allowed to after-react for a limited time, for example for up to about 45 minutes, in contact with the solution containing precipitating metal ions and is then washed and, if desired, dried, preferably before any further treatment.

16. A process as claimed in claims 1 to 15, characterized in that the surface of the shaped solidified materials is modified, more particularly roughened, by mechanical and/or chemical treatment.

17. A process as claimed in Claim 16, characterized in that the granular or bead-like solidified material is briefly rolled as such.

18. The use of the shaping agglomeration process claimed in claims 1 to 17 for the production of free-flowing granular materials having average grain sizes of from 1 to 10 mm and preferably from 2 to 7 mm from a finely powdered starting material.

19. The use claimed in Claim 18, characterized in that the process is used for the agglomeration of active carbon or multi-component mixtures containing active carbon to form corresponding catalysts, for example containing heavy metals, in granular form.

## Revendications

1. Procédé pour l'agglomération de mise en forme de fines particules de solide mises en suspension dans une phase liquide en utilisant un liant, caractérisé en ce qu'on utilise comme liant des polymères solubles dans la phase liquide choisie, qui présentent des groupes acides appropriés à la formation de sels insolubles, ces groupes pouvant aussi exister sous forme de sels solubles, et en ce qu'on dissout ces liants dans la phase liquide et on incorpore les particules de solide à agglomérer en une masse pâteuse déformable et on met en forme cette masse avec une solution de cations qui réagissent avec les groupes acides du liant polymère, pour donner des solides insolubles, en utilisant comme produit insoluble à agglomérer des substances solides en poudre ou pouvant s'écouler, par exemple des mélanges de solide, par exemple à base de poudre métallique, de composés métalliques insolubles tels que des oxydes ou des sulfures métalliques, des sels métalliques insolubles et/ou du charbon actif.

2. Procédé selon la revendication 1, caractérisé en ce qu'on utilise des liquides miscibles entre eux dans la masse pâteuse et dans la phase liquide comprenant les cations réactifs.

3. Procédé selon les revendications 1 et 2, caractérisé en ce qu'on travaille avec des phases liquides aqueuses ou aqueuses/organiques, notamment avec l'eau dans les deux partenaires de réaction.

4. Procédé selon les revendications 1 à 3, caractérisé en ce qu'on utilise comme liant des composés polymères naturels et/ou synthétiques, qui contiennent comme groupes formateurs de sels notamment des groupes carboxyles et/ou des groupes acide sulfonique.

5. Procédé selon les revendications 1 à 4, caractérisé en ce qu'on utilise comme liant d'origine naturelle soluble des dérivés de polysacchride en particulier hydrosolubles avec des groupes formateurs de sel, de préférence du type de la carboxyméthycellulose, du carboxymméthylamidon et/ou des composés agar-agar carboxyméthyle substitués.

6. Procédé selon les revendications 1 à 4, caractérisé en ce qu'on utilise comme liant synthétique soluble des polymères, en particulier hydrosolubles, qui contiennent de préférence des groupes carboxyles ou carboxylates et qui sont notamment des mono et/ou copolymères d'acides oléfiniques inférieurs insaturés mono et/ou dicarboxyliques.

7. Procédé selon les revendications 2 à 6, caractérisé en ce qu'on utilise les liants polymères au moins sous forme de leurs sels hydrosolubles d'alcali, d'ammonium et/ou d'amine ou de polyamine.

8. Procédé selon les revendications 1 à 7, caractérisé en ce qu'on utilise pour transformer le liant polymère dissous en la forme insoluble pour formation de sel des cations métalliques polyvalents, notamment du calcium, baryum, aluminium et/ou des métaux lourds comme le fer, le chrome, le zinc, le nickel, le cobalt et/ou notamment le cuivre.

9. Procédé selon les revendications 1 à 8, caractérisé en ce qu'on utilise des liants polymères hydrosolubles de poids moléculaires moyens (Mn) de 500 à 5 Mio, notamment de 1000 à 500000, les teneurs en solide du liant polymère – rapportées à la masse pâteuse formable – peuvent être comprises entre 1 et 30% en pds, de préférence 2 à 20% en pds et notamment de 2 à 10% en pds.

10. Procédé selon les revendications 1 à 9, caractérisé en ce qu'on utilise des liants polymères avec une teneur en éléments monomères présentant des groupes acide d'au moins 5% molaire, de préférence d'au moins 20% molaire, en utilisant comme copolymères stables à la température, notamment 20 à 60% molaire d'unités d'acide carboxylique inférieur copolymérisées avec de l'éthylène, du propylène et/ou de l'éther méthylvinylique.

11. Procédé selon les revendications 1 à 10, caractérisé en ce qu'on utilise des suspensions de solide d'une viscosité comprise entre 100 et 2 millions mPas.

12. Procédé selon les revendications 1 à 11, caractérisé en ce qu'on utilise des solutions aqueuses contenant les ions métalliques précipitants, avec des teneurs en ions précipitants d'environ 1% en pds à la saturation, notamment entre 3 et 20% en pds.

13. Procédé selon les revendications 1 à 12, caractérisé en ce qu'on solidifie avec mise en forme des suspensions de solide relativement fluides (viscosité préférée dans l'intervalle de 100 à 4000 mPas) par addition goutte à goutte dans la solution d'ions métalliques précipitants, tandis qu'on met en forme les masses à haute viscosité par action de forces mécaniques – par exemple par extrusion – et qu'on réunit à la solution précipitante, par exemple en les y incorporant, après quoi, si c'est nécessaire on soumet ensuite le produit précipité et durci à une autre transformation de mise en forme, notamment un broyage.

14. Procédé selon les revendications 1 à 13, caractérisé en ce qu'on réalise le précipité à des températures de 0 à 80°C.

15. Procédé selon les revendications 1 à 14, caractérisé en ce qu'on laisse réagir pendant un temps limité de par exemple jusqu'à 45 minutes le produit précipité et solidifié en contact avec la solution contenant les ions métalliques précipitants et ensuite on lave avant une autre transformation et le cas échéant on sèche.

16. Procédé selon les revendications 1 à 15, caractérisé en ce qu'on modifie la surface du produit solidifié mis en forme par traitement mécanique et/ou chimique, notamment on le rend rugueux.

17. Procédé selon la revendication 16, caractérisé en ce qu'on broie pendant un court instant le produit solidifié granuleux ou sphérique en masse.

18. Utilisation du procédé d'agglomération de mise en forme selon les revendications 1 à 17 pour préparer des masses granulées capables de s'écouler, de granulométrie moyenne comprise entre 1 et 10 mm de préférence 2 à 7 mm à partir d'un matériau fin en poudre.

19. Utilisation selon la revendication 18, caractérisée en ce qu'on utilise le procédé pour agglomérer du charbon actif ou des mélanges de substance contenant du charbon actif pour obtenir, en conséquence, des catalyseurs contenant des métaux lourds sous forme granulée.